# FASCICULE DE BREVET EUROPEEN

(11) **EP 3 867 498 B1**
(45) Date de publication et mention de la délivrance du brevet: **19.04.2023**
(21) Numéro de dépôt: 19795038.9
(22) Date de dépôt: 24.09.2019
(51) Int. Cl.: F01D 5/14, B64C 3/14, B64C 11/18, B64C 21/00, F04D 29/32, B64C 3/10, B64C 5/02, F04D 29/66, F04D 29/68

(54) **STRUCTURE PROFILEE POUR AERONEF OU TURBOMACHINE**
PROFILIERE STRUKTUR FÜR EIN FLUGZEUG ODER EINE TURBOMASCHINE
PROFILED STRUCTURE FOR AN AIRCRAFT OR TURBOMACHINE

(30) Priorité: 18.10.2018 FR 1859664
(43) Date de publication de la demande: 25.08.2021
(73) Titulaire: SAFRAN AIRCRAFT ENGINES, 75015 Paris (FR); Office National d'Etudes et de Recherches Aérospatiales, 91120 Palaiseau (FR)
(72) Inventeur: GEA AGUILERA, Fernando, 77550 Moissy-Cramayel (FR); BARRIER, Raphaël, 75013 Paris (FR); GRUBER, Mathieu Simon Paul, 77550 Moissy-Cramayel (FR); POLACSEK, Cyril, 92140 Clamart (FR); POSSON, Hélène Dominique Jeanne, 77550 Moissy-Cramayel (FR)
(74) Mandataire: Ernest Gutmann - Yves Plasseraud S.A.S.
(86) Numéro de dépôt international: PCT/FR2019/052237
(87) Numéro de publication internationale: WO 2020/079335

(56) Documents cités:
- EP-A1- 3 477 057
- EP-A2- 1 277 966
- WO-A1-2018/138439
- CN-A- 101 716 995
- CN-A- 104 612 758
- CN-A- 105 332 948
- US-A1- 2018 023 398
- US-A1- 2018 023 403
- US-A1- 2018 057 141

## Description

### INTRODUCTION

La présente invention concerne le domaine de la gestion aéroacoustique de structures profilées aérodynamiquement, ou profils d'éléments aérodynamiques, telles par exemple que des aubes fixes ou en rotation dans une turbomachine pour aéronef ou dans un banc d'essai de telles turbomachines, ou sur un bec d'entrée d'air primaire de la turbomachine.

Ce type d'aube fixe se retrouve par exemple sur des aubes directrices de sortie de soufflante OGV (Outlet Guide Vane), ou redresseurs, disposés en aval d'un corps tournant pour redresser le flux d'air.

Ce type d'aube en rotation se retrouve par exemple sur une roue d'aubages tournants dans la turbomachine, comme une soufflante ou une roue non carénée.

Sont donc concernées tant les turbomachines carénées (turbofans/turbosoufflantes) que les turbomachines non-carénées (open-rotors). Un exemple sera donné pour une turbomachine double flux avec une soufflante (avant) et un redresseur disposé en veine secondaire.

Notamment dans les turboréacteurs Ultra-High Bypass Ratio (UHBR ; configuration de moteur à soufflante carénée à très haut taux de dilution, au-delà de 15), il est envisagé d'augmenter le diamètre de la soufflante et de réduire la longueur de la nacelle de suspension à l'aéronef, diminuant ainsi la distance entre la soufflante et les aubes directrices d'entrée de compresseurs IGV (Inlet Guide Vanes), les OGV et le bec d'entrée d'air primaire. Dans ce type de moteur, l'interaction du sillage de la soufflante avec les IGV, les OGV et le bec est une des sources de bruit dominante.

Au-delà de ce constat dans une turbomachine, d'autres zones de turbomachines, mais aussi de structures profilées aérodynamiquement (ailes, aubes d'open-rotor - rotor ouvert -, pylône, ... etc) sont confrontées à des problématiques aéro-acoustiques d'interaction avec un écoulement d'air.

Aussi a-t-il déjà été proposé, notamment dans le domaine des aéronefs, d'utiliser des structures profilées aérodynamiquement présentant un bord d'attaque et/ou de fuite profilé ayant, suivant une ligne de bord d'attaque et/ou de fuite, un profil en serrations pourvu donc d'une succession de dents et de creux.

Ainsi, ce profil en serrations s'étend le long du bord d'attaque et/ou de fuite, autrement dit dans la direction de l'allongement de la structure au bord d'attaque et/ou de fuite.

Notamment sur les profils à corde réduite, mais aussi sur les profils fermés - (ligne de) bord d'attaque et/ou de fuite allongé suivant une ligne ou direction d'allongement fermée sur elle-même, ligne périmétrique, comme sur un bec d'entrée d'air primaire de turbomachine -, le bruit est principalement produit au niveau du bord d'attaque et/ou de fuite, plus précisément aux creux des serrations où les fluctuations de pression sont plus intenses.

Au sujet du terme « corde » utilisé dans le présent texte, il est à noter que s'il n'y a pas strictement de « corde » comme dans le cas d'un bec (repéré 16 ci-après) de séparation entre les flux primaire et secondaire, on considérera que l'expression « dans la direction de la corde (repérée 40 ci-après) du profil » correspond alors à la direction de ce qui est dénommé ci-après « axe général (X) » ou « axe X », à savoir l'axe suivant lequel s'écoule globalement le flux fluide sur la structure profilée concernée, cet axe étant typiquement transversal, voire perpendiculaire, à l'allongement de la structure profilée, qui s'étend suivant ladite « direction d'allongement ».

On aura compris que l'expression « transversal(e) » n'implique pas une stricte perpendicularité.

L'invention vise à assurer un compromis entre une réduction de bruit sur cette structure, les pertes aérodynamiques à y limiter, tout comme les contraintes mécaniques, et l'intégration de la structure profilée dans son environnement.

En particulier, on pourra prendre en considération le fait que, dans un certain nombre de situations, une dite structure profilée est exposée à un écoulement d'air inhomogène et/ou anisotrope.

C'est dans ce cadre que l'invention propose plusieurs profils hétérogènes avec notamment la présence de serrations sur une étendue partielle de la ligne de bord d'attaque et/ou de bord de fuite.

Plus précisément, est ainsi concernée une structure profilée :
- allongée suivant une direction selon laquelle la structure présente une longueur exposée à un écoulement d'air, et
- transversalement à laquelle la structure présente un bord d'attaque et/ou un bord de fuite, dont l'un au moins est profilé et présente, suivant ladite direction d'allongement, des serrations définies par des dents et des creux se succédant.

Une structure profilée est connue de CN101716995A, CN105332948A, EP1277966A2, US2018057141A1, WO2018138439A1.

Ceci est également connu de US2018023403 qui divulgue aussi que, le long du bord d'attaque et/ou du bord de fuite profilé(s):
- les dents et creux se succédant peuvent ne s'étendre que sur une partie de ladite longueur exposée à l'écoulement d'air, une partie restante de ladite longueur étant lisse, et
- sur ladite partie de longueur, à l'exception de zones comprenant au plus trois dents successives situées à (le plus près de) chaque extrémité de ladite partie de longueur, les serrations présentent des variations d'amplitude (ci-après « d ») et/ou d'écartement (ci-après « L2 ») entre deux sommets de dents ou de creux successifs.

La solution de US2018023403 est pertinente.

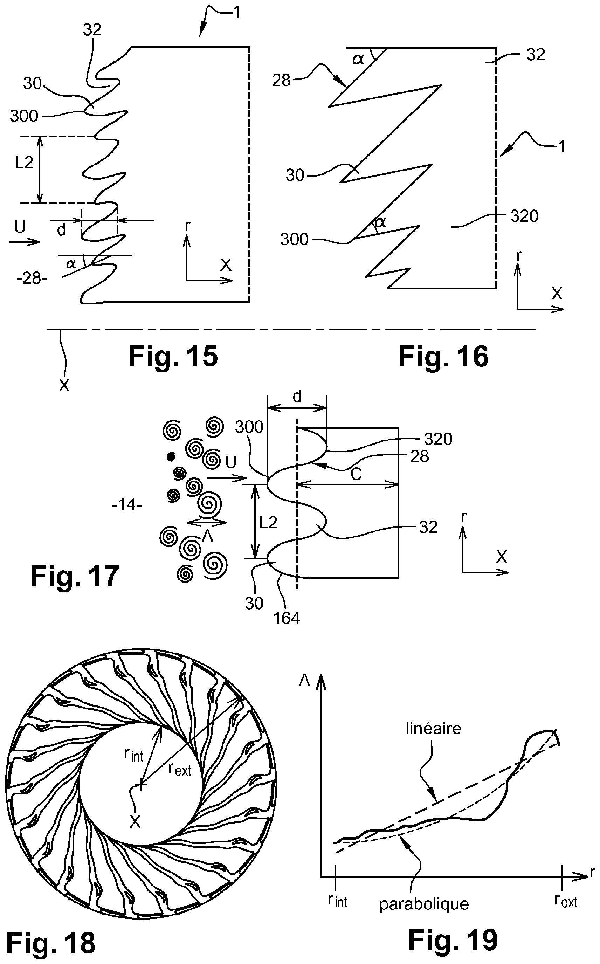

Mais, il s'est avéré qu'en outre, si lesdites variations d'amplitude et/ou d'écartement sont monotones, alors un avantage est de pouvoir suivre la loi d'évolution de l'échelle intégrale de la turbulence dans le sillage, appelé aussi écoulement incident (voir figure 19 ci-après). Par exemple sur un OGV, normalement, l'échelle intégrale est grande près du carter et est petite près du moyeu (hors couche limite). On évite alors que loi d'évolution précitée réelle de l'échelle intégrale soit erratique.

Avec une/de telle(s) variation(s) évoluant suivant au moins une fonction numérique qui reste soit strictement croissante, soit strictement décroissante, sur la portion concernée (en fait sur une succession d'au moins trois dents ou d'au moins trois creux), où son sens de variation est donc constant, on pourra par ailleurs supprimer d'éventuelles pertes aérodynamiques ou limiter les contraintes mécaniques, ou encore faciliter l'intégration de la structure profilée dans son environnement.

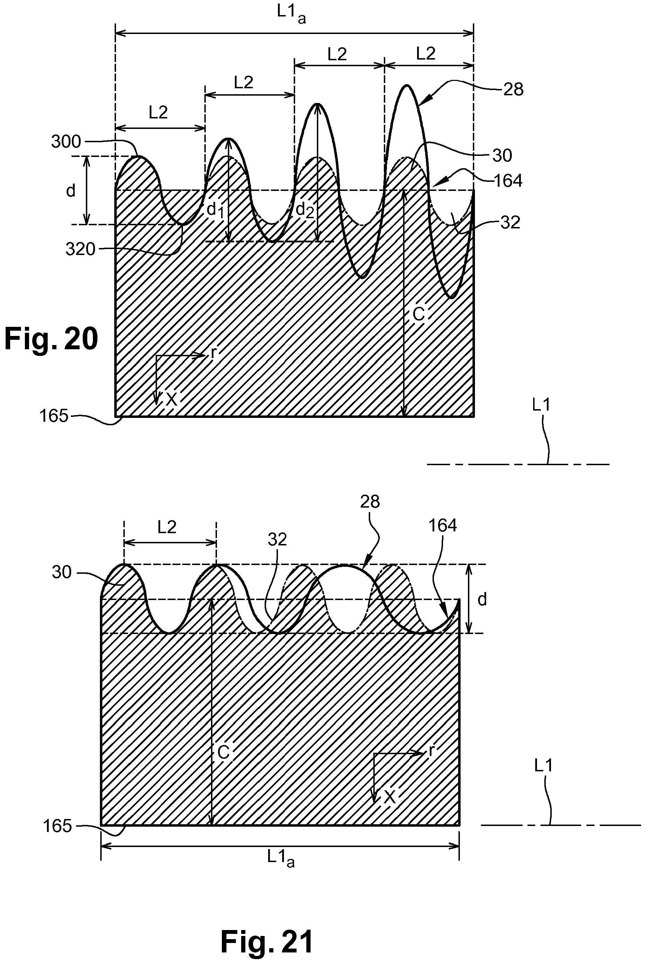

Afin de limiter les contraintes mécaniques et la formation de criques au niveau des creux, et/ou réduire les contraintes de fabrication, tout en cherchant à maintenir une bonne atténuation des niveaux acoustiques, il est aussi proposé que, sur une partie au moins de la longueur exposée à l'écoulement d'air où des serrations sont présentes et
- soit en référence à une corde moyenne (moyenne arithmétique de la corde sur la longueur L1 ; voir figures 20-25 ci-jointes),
- soit pour chaque corde à chaque serration suivant ladite direction,
ces serrations respectent, transversalement à la direction d'allongement, la relation : 0.005≤d/c≤0.5, avec : « d » l'amplitude des serrations en m et « c » la corde locale ou moyenne de la structure profilée, à l'endroit des serrations, en m.

Afin de limiter les contraintes mécaniques et la formation de criques au niveau des creux, et/ou réduire les contraintes de fabrication et/ou réduire les pertes aérodynamiques, tout en cherchant à maintenir une bonne atténuation des niveaux acoustiques, il est aussi proposé que, sur une partie au moins de ladite longueur où des serrations sont présentes, l'amplitude (d) et/ou l'écartement (L2) entre deux sommets de dents ou de creux successifs varie :
- de manière non-périodique, ou,
- en particulier, de manière linéaire (croissante ou décroissante), quadratique, hyperbolique, exponentielle et/ou logarithmique.

Afin de chercher à lisser les transitions mécaniques et acoustiques entre zones et là encore réduire certaines contraintes de fabrication, il est proposé:
- que le long du bord d'attaque et/ou du bord de fuite profilé(s) les serrations présentent donc des variations monotones d'amplitude et/ou d'écartement entre deux sommets de dents ou de creux successifs, et/ou
- que, le long du bord d'attaque et/ou du bord de fuite profilé(s), et par variation d'amplitude et/ou d'écartement entre trois sommets de dents ou de creux successifs de longueur d'onde, les serrations se raccordent progressivement à ladite partie lisse de la longueur exposée à l'écoulement d'air qui en est dépourvue, et/ou
- que les serrations se terminent (à une extrémité de raccordement à la partie lisse) par un raccord qui tangente ladite partie lisse.

Avec un objectif comparable visant à assurer une transition où règne un compromis entre effet acoustique maximisé et contraintes mécaniques minimisées, il est proposé qu'une série d'au moins deux dents et deux creux consécutifs à partir de ladite partie de la longueur exposée à l'écoulement d'air qui est dépourvue de serrations présente :
- une distance croissante, suivant ladite direction d'allongement, entre deux sommets de dents ou de creux consécutifs (s), et/ou
- une amplitude croissante,
ceci en allant de la partie lisse vers les serrations, comme on l'aura compris.

Encore avec le même objectif, il est aussi proposé que, suivant la longueur exposée à l'écoulement d'air, les serrations débutent et/ou se terminent par une dent au niveau des encastrements (sauf dans le cas d'une structure de type « bec »).

Pour toujours favoriser la structuration mécanique et l'effet de limitation acoustique, il est aussi proposé que, sur ladite partie lisse de la longueur, ladite structure présente une corde plus longue qu'elle ne l'est en fond du creux le plus proche.

Selon les cas de figures, il est prévu que, suivant ladite longueur exposée à l'écoulement d'air, les serrations puissent être absentes :
- à l'une au moins des deux extrémités de ladite longueur, ou
- en partie intermédiaire entre ces extrémités et présentes alors auxdites deux extrémités.
- en plusieurs endroits de la longueur séparés les uns des autres, par exemple absentes à une extrémité et dans une portion de la zone intermédiaire.

Le premier cas doit permettre de limiter les possibles contraintes mécaniques au niveau des interfaces/jonctions entre une dite structure profilée et une zone d'emplanture/de fixation d'une aube en rotation, par exemple sur une hélice ou dans entre deux parois d'une veine d'air.

Le second cas doit permettre de limiter les serrations aux endroits où la turbulence est la plus importante et les supprimer ailleurs, pour ne pas perturber le comportement aérodynamique dans ces zones.

Même démarche - et cela d'autant plus si plusieurs structures profilées, pouvant influer les unes sur les autres, sont prévues - en visant dans l'invention un ensemble de structures profilées, chacune ayant toutes ou partie des caractéristiques précitées, dont les directions d'allongement respectives s'étendent radialement autour d'un axe de révolution, et dont la distance entre deux sommets de dents ou de creux consécutifs et/ou l'amplitude est plus importante (ou donc longue) à une extrémité radialement extérieure de la longueur exposée à un écoulement d'air qu'à une extrémité radialement intérieure de cette longueur.

Ainsi, par exemple dans le cas où lesdites structures profilées seraient des OGVs situés en aval d'une soufflante, et avec de telles amplitudes et/ou longueurs d'onde (distances entre deux sommets successifs de creux ou de dents) de serrations plus importantes (ou donc longue) près du carter extérieur (en tête d'aubes OGV) qu'au pied, près de la zone inter-veines, on absorberait les inconvénients liés au fait que les tourbillons de bout de pales de la soufflante sont de plus grande taille et assez énergétiques sur de nombreux turboréacteurs.

De ce fait, on comprendra d'autant mieux qu'est aussi concernée par l'invention :
- une turbomachine carénée ou non à soufflante amont et présentant un axe général (ce pourra être l'axe de révolution précité) et comprenant un rotor, pouvant tourner autour dudit axe général, et un stator, le stator et/ou le rotor comprenant des structures profilées, chacune ayant toutes ou partie des caractéristiques précitées,
- et notamment une turbomachine dans laquelle le stator comprend (ou la structure profilée est celle de) :
   -- une paroi annulaire de séparation (inter-veines), pour la séparation du flux d'air, en aval de la soufflante, entre un flux primaire et un flux secondaire,
   -- des aubes d'OGVs fixes de guidage du flux secondaire, lesquelles définissent desdites structures profilées.
   -- des aubes d'IGVs fixes de guidage du flux primaire à l'entrée du compresseur, lesquelles définissent desdites structures profilées, et/ou
- une turbomachine carénée ou non (dont ledit axe général pourra être l'axe de révolution précité) comprenant deux rotors, pouvant tourner parallèlement (suivant au moins un axe parallèle) audit axe général, et/ou l'un et/ou l'autre des rotors comprenant desdites structures profilées, chacune ayant tout ou partie des caractéristiques précitées.

L'invention sera si nécessaire mieux comprise et d'autres détails, caractéristiques et avantages de l'invention pourront apparaître à la lecture de la description qui suit, faite à titre d'exemple non limitatif en référence aux dessins annexés.

### BREVE DESCRIPTION DES FIGURES

- la figure 1 est un schéma en coupe longitudinale (axe X) d'une turbomachine conventionnelle d'aéronef;
- la figure 2 schématise la zone amont (bec) de la paroi de séparation entre les flux primaire et secondaire, avec une solution conforme à l'invention ;
- la figure 3 peut être soit le détail III de la figure 2, soit un schéma local de profil en serrations présent sur ce qui peut être une pale d'hélicoptère, une aube de la soufflante, une partie du rotor ou du redresseur, un bec de bord d'attaque ou un volet d'aile d'aéronef ;
- la figure 4 est le détail IV de la figure 1 ;
- la figure 5 schématise un aéronef porteur de structures conformes à l'invention ;
- les figures 6 à 14 schématisent diverses formes de profils à serrations conformes à l'invention et qui peuvent par exemple correspondre à la zone I des figures 1 ou 5 ;
- les figures 15-16 schématisent deux autres profils à serrations conformes à l'invention, et en particulier décalées angulairement (angle α) ;
- la figure 17 est un agrandissement local d'un exemple de zone à serrations, conformément à l'invention, en aval d'une soufflante ;
- les figures 18-19 schématisent respectivement une coupe axiale d'intensité de turbulence dans le sillage d'une soufflante de turboréacteur double flux, jusqu'aux OGV, et l'évolution radiale correspondante de l'échelle intégrale de la turbulence (^) en fonction du rayon (r), entre le rayon intérieur rint et le rayon extérieur rext de la veine d'air, repérée 20 ci-après, et
- les figures 20-22 schématisent des parties de longueur de bord d'attaque ou de fuite à serrations présentant des variations d'amplitude (d) ou d'écartement (L2) (strictement) monotones; sur ces figures, les traits pleins montrent les profils réels des serrations, les traits ondulés grisés plus fin montrant des profils fantômes de serrations, calculés pour définir la corde moyenne et figurant un profil de référence à partir duquel ont été définis les variations monotones en amplitude et/ou écartement, et
- les figures 23-25 schématisent des parties de longueur de bord d'attaque ou de fuite à serrations où les transformations des serrations suivent des lois d'évolution non-périodiques et monotones (au moins partiellement), tels que des lois linéaires, logarithmiques et paraboliques, respectivement.

### DESCRIPTION DETAILLEE

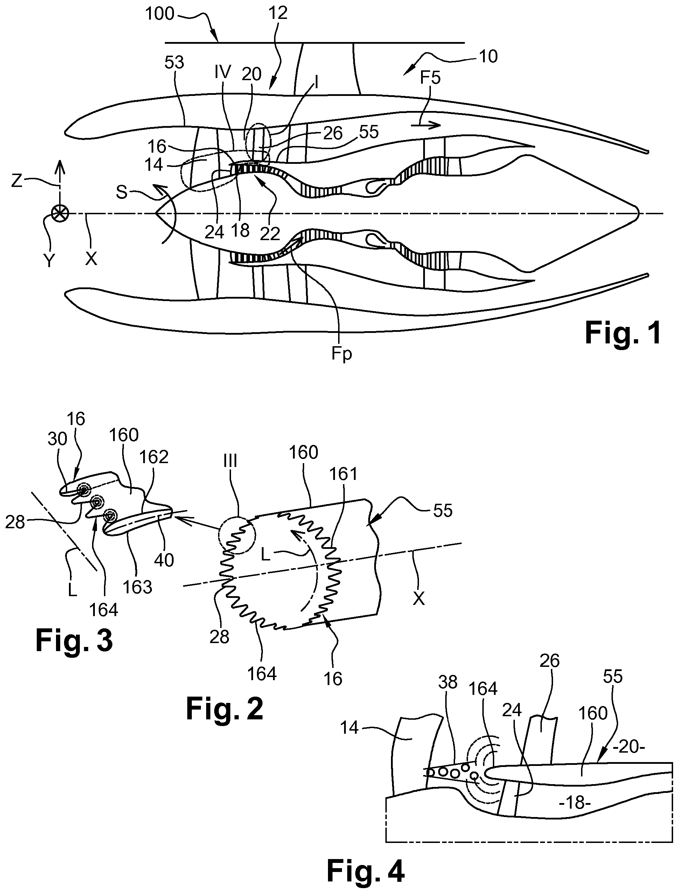

Même si cela n'est pas très net à l'œil, on doit considérer que sur toutes les figures 2-17 et 23-25 les variations d'amplitude (d) et/ou d'écartement (L2) entre deux sommets de dents ou de creux successifs sont monotones dans les conditions précitées.

Si l'on se reporte à la figure 1, un turboréacteur 10 d'aéronef 100 est représenté de façon schématique et est défini comme suit :

La nacelle 12 sert d'enveloppe extérieure aux différents organes, parmi lesquels, à l'avant (à gauche sur la figure 1) une soufflante 14 amont (AM).

En aval (AV) de la soufflante 14, le flux d'air (localement schématisé 38 figure 4) est séparé par le bec séparateur 16 d'une paroi annulaire 160 en un flux d'air primaire et un flux d'air secondaire. Le flux d'air primaire parcourt un passage d'air annulaire interne ou veine primaire 18 en pénétrant dans le compresseur basse pression 22 au niveau des aubes directrices d'entrée 24 IGV. Le flux d'air secondaire est dévié par le bec séparateur 16 dans un passage d'air annulaire externe 20 (veine secondaire) en direction des aubes directrices de sortie 26 OGV, puis vers la sortie du moteur.

Sur les figures 2 et 3, on visualise de façon plus précise la partie avant 161 du bec séparateur 16 comprenant le bord d'attaque 164 situé le plus en amont et au niveau duquel la paroi externe 162 du bec séparateur 16 rejoint la paroi interne 163 du bec séparateur 16, la paroi supérieure 162 formant la virole intérieure de la veine secondaire 20.

A toutes fins, il est précisé que, dans le présent texte, est axial ce qui s'étend suivant ou parallèlement à l'axe longitudinal (X) de rotation de la partie concernée de la turbomachine, lequel axe sera a priori l'axe général de rotation de cette turbomachine. Est radial (axe Z) ce qui s'étend radialement à l'axe X et est circonférentiel ce qui est autour de lui. Est interne ou intérieur et externe ou extérieur ce qui l'est radialement, vis-à-vis de l'axe X. Ainsi, la paroi interne 163 est la paroi radialement interne du bec séparateur 16. Par ailleurs, les références amont et aval sont à considérer en liaison avec l'écoulement des gaz dans la (partie de) turbomachine considérée : ces gaz entrent à l'amont et sortent à l'aval, en circulant globalement parallèlement à l'axe longitudinal de rotation précité.

En outre, les dessins joints, et les descriptions qui s'y rapportent, ont été définis en référence au repère orthogonal conventionnel X-Y-Z, avec donc l'axe X comme ci-dessus défini.

Le bec séparateur 16 est défini par deux faces : la face extérieure de la paroi 162 servant de limite radialement interne au passage d'air annulaire externe 20 recevant le flux secondaire Fs tandis que la face intérieure de la paroi 163 sert de limite radialement externe au passage d'air annulaire interne 18 recevant le flux primaire Fp.

La paroi inférieure 163 du bec séparateur 16 forme la virole extérieure du compresseur basse pression 22.

Même si le décalage axial (X) vers l'aval des aubes IGV 24 par rapport au bord d'attaque 164 du bec séparateur 16 est moindre par comparaison avec celui des aubes OGV 26 par rapport à ce même bord d'attaque 164, la portion de la partie avant 161 directement adjacente au bord d'attaque 164 du bec séparateur 16 est dégagée.

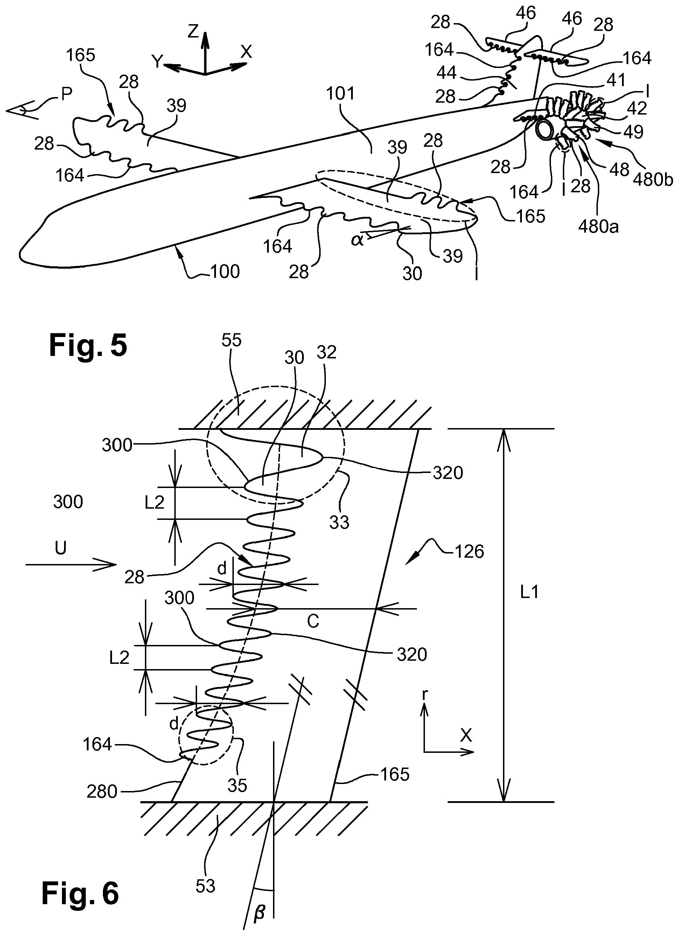

Afin de réduire le bruit généré par le bord d'attaque, par exemple d'un bec 16, OGV 26, IGV 24, on peut donc prévoir que ce bord d'attaque 164 présente un profil 28 à serrations présentant une succession de dents 30 et de creux 32, comme illustré dans les exemples des figures 6-17.

Mais des structures autres que sur une turbomachine, telle le turboréacteur 10, peuvent être concernées par la solution de l'invention et donc présenter un bord d'attaque 164 à profil 28 à serrations présentant une succession de dents 30 et de creux 32.

La figure 5 schématise un aéronef 100 sur lequel des structures profilées à tel profil 28 à serrations sont présentes, en bord d'attaque, sur les ailes 39, sur un pylône 41 de support d'un moteur 42 de l'aéronef, sur une dérive 44, un stabilisateur 46, une hélice ou aube 48 d'open-rotor, ou encore des aubes fixes 49 (stator) en aval d'un open rotor ou hélice non-carénée. Sur cette figure 5, on trouve deux turbomachines de propulsion de l'aéronef, comprenant deux groupes d'open-rotor, chacun à deux rotors 480a,480b se succédant coaxialement, pouvant tourner parallèlement audit axe général (X), l'un et/ou l'autre de ces rotors comprenant des structures profilées 1.

Par ailleurs, la figure 3 schématise localement un profil 28 en serrations présent sur ce qui peut être, repéré 50, une pale d'hélicoptère, une aube de la soufflante, une partie du rotor ou du redresseur, un bec de bord d'attaque ou un volet d'aile d'aéronef.

Tous ces profils aérodynamiques ont pour point commun de générer une couche limite sur la surface en aval, et donc un écoulement turbulent.

Quelle que soit l'application, concernant le profil 28 à serrations, on va ici considérer :
- que ce profil appartient à une structure profilée 1 (ou profil aérodynamique), autour de laquelle(duquel) s'écoule de l'air, qui est allongé(e) suivant une direction Z selon laquelle la structure (ou le profil) présente une longueur L1 exposée à l'écoulement d'air, et
- que, transversalement à la direction Z, la structure (ou le profil) 1 possède un bord d'attaque 164 et/ou un bord de fuite 165 (le bec séparateur 16 ne présente pas de bord de fuite), dont l'un au moins est profilé et présente donc, suivant ladite direction d'allongement Z, des serrations (profil 28) définies par lesdites dents 30 et creux 32 se succédant.

Les dents 30 et creux 32 se succèdent, alternativement.

Le nombre de dents 30 et celui des creux 32 sera compris entre 3 et 100, pour optimiser l'efficacité.

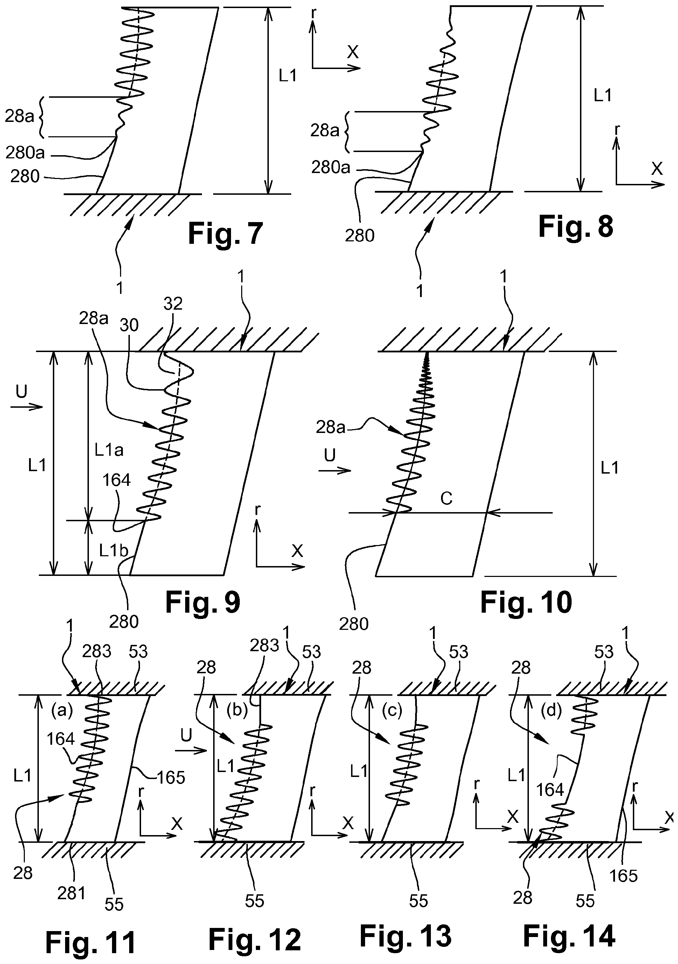

Afin comme précité, de prendre en considération que, dans nombre de situations, une dite structure profilée 1 est exposée à un écoulement d'air inhomogène et/ou anisotrope et à assurer un compromis entre la réduction de bruit visée, les pertes aérodynamiques à limiter, de même que les contraintes mécaniques, et l'intégration de la structure profilée dans son environnement, il est donc proposé que, le long du bord d'attaque 164 et/ou du bord de fuite 165 profilé(s), les serrations 28 soient présentes sur une zone restreinte de la longueur L1 (voir figures 7 à 14).

Pour compléter la solution utilement, et aux mêmes fins, il est proposé de plus que :
- sur une portion au moins de la partie de la longueur où les serrations 28 existent,
- et plus précisément à l'exception de zones (telles que 33 et 35 figure 6) comprenant au plus trois dents successives situées à chaque extrémité de ladite partie de longueur :
   les serrations 28 présentent (voir figures 6,10,16 et 20-25, notamment) :
   - transversalement à la direction d'allongement Z, une amplitude d des serrations qui varie de manière monotone, et/ou
   - suivant ladite direction d'allongement, une distance L2 entre deux sommets (300,320 respectivement) de dents 30 ou de creux 32 consécutifs qui varie de manière monotone.

L'amplitude d pourra être mesurée, suivant l'axe X, entre un sommet 300 de dent 30 et le fond 320, qui suit dans un sens donné, du creux 32 immédiatement adjacent.

Avec un rapport entre l'amplitude la plus grande et l'amplitude la plus petite compris entre 1.2 et 20, y compris si nécessaire en tenant compte de la zone de transition/raccordement 28a évoquée ci-après, les serrations 28 seront à la fois performantes en termes d'efficacité acoustique, de résistance mécanique et d'intégration (fixation) dans leur environnement de proximité.

Pour compléter utilement, et aux mêmes fins, cette contrainte sur d et L2, on pourra rendre hétérogènes (non uniformes sur leur longueur active L1) les profils à serrations 28 de toutes les solutions qui suivent, avec donc des évolutions radiales de ces serrations ; voir figures 7-10.

En particulier, les dents 30 et creux 32 se succédant ne s'étendront alors que sur une partie L1a de cette longueur L1 exposée à l'écoulement d'air. Une partie restante L1b de la longueur L1 sera lisse (c'est-à-dire dépourvue de serrations) ; partie 280.

Pour affiner encore ce compromis et notamment prévenir la formation de criques au niveau des creux, par exemple la figure 6, illustre l'intérêt qu'il pourra y avoir à ce que les serrations 28 respectent, transversalement à la direction d'allongement Z, la relation : 0.005≤d/c≤0.5, avec :
- « d » l'amplitude des serrations en m, et
- « c » la corde de la structure profilée, à l'endroit de ces serrations, en m.

Cette corde c sera soit la corde moyenne sur la longueur L1a, soit celle à chaque serration (une dent suivie d'un creux), suivant ladite direction Z ; voir figures 6,10 et 20-22.

La recherche du compromis précité a aussi mis à jour l'intérêt qu'il pourra y avoir à prévoir un raccord, appelé aussi zone de transition, 28a:
- où, par variation - et plus précisément, en allant vers la partie lisse 280, diminution globale, monotone - d'amplitude d et/ou d'écartement L2 entre deux sommets, respectivement 300, 320, de dents 30 ou de creux 32 successifs, les serrations se raccorderont progressivement (zone de transition /raccordement 28a) à ladite partie lisse 280 ; cf. figures 7-8, et/ou
- où les serrations 28 se termineront (à leur extrémité de raccordement à la partie lisse) par une zone 280a qui tangentera ladite partie lisse 280 dépourvue de serrations; cf. figures 7-8.

En particulier dans cette situation, on tirera un avantage au moins structurel à ce que, suivant la longueur L1, les serrations 28 débutent et se terminent par une dent 30 au niveau des encastrements sur les zones avec des serrations, comme illustré figures 6,7. On appelle encastrements les insertions des structures dans leurs supports, en extrémité(s) par exemple le carter extérieur 53 et/ou le moyeu central 55.

Rechercher encore davantage ce compromis pourra même amener à choisir qu'en particulier en zone de transition 28a une série d'au moins deux (de préférence trois) dents 30 et deux (de préférence trois) creux 32 consécutifs à partir de ladite partie L1b de la longueur dépourvue de serrations présente :
- une distance L2 croissante, suivant ladite direction d'allongement, entre deux sommets de dents ou de creux consécutifs (s), et/ou
- une amplitude d croissante, comme illustré figures 7,8.

Par ailleurs, en prévoyant une corde c plus longue sur la partie lisse 280 qu'elle ne l'est en fond (sommets 320) de creux 32, on renforcera la structuration mécanique et l'effet de limitation acoustique, en favorisant la définition de la zone de transition 28a.

Dans ce qui suit, on va concentrer les explications sur l'exemple des OGVs 26 en ce qu'il s'agit typiquement d'une zone critique puisque située juste en aval de la soufflante 14. Mais les caractéristiques concernées sont extrapolables à d'autres cas de profil à serrations 28.

Les serrations 28 au niveau du bord d'attaque 164 des OGV 26 peuvent perturber les propriétés aérodynamiques de l'OGV ou rendre délicate l'intégration mécanique de l'OGV dans la veine 20 (figure 1). Afin de limiter l'impact de ces serrations sur la performance aérodynamique des OGV, sur les contraintes mécaniques locales et sur leur intégration, on a choisi que de telles serrations ne couvrent qu'entre 0.05L et 0.95L de l'envergure active (longueur L1) de l'OGV.

Les figures 11-14 illustrent différentes situations de telles zones partielles de serrations 28 en bord d'attaque 164 et/ou de fuite 165.

Ainsi:
- en figure 11 : Serrations 28 absentes en extrémité interne 281 des profils (ici absentes en pied d'OGV). On vise à relâcher les contraintes mécaniques et/ou aérodynamiques en extrémité interne, tout en maintenant une bonne atténuation des niveaux acoustiques en extrémité externe 283 (près du carter extérieur 53 dans l'exemple) où l'intensité de la turbulence et l'échelle intégrale de la turbulence ou échelle caractéristique de la turbulence sont importantes. Les serrations près du carter extérieur pourraient également être utiles pour éviter un éventuel décollement de la couche limite à certains régimes ou conditions de vol,
- en figure 12 : Serrations 28 absentes en extrémité externe 283 des profils (ici absentes en tête d'OGV). On vise à relâcher les contraintes mécaniques et/ou aérodynamiques en tête tout en maintenant une bonne atténuation sur le reste de l'envergure du profil ou à éviter un éventuel décollement de la couche limite à certains régimes au niveau du pied de la structure (support, par exemple moyeu central 55 auquel peut appartenir la paroi annulaire 160 ; figures 2,4),
- en figure 13 : Serrations 28 présentes en partie intermédiaire du profil au niveau, mais absentes en extrémité externe 283 et interne 281. On vise alors à éliminer les possibles contraints mécaniques au niveau des jonctions entre la structure concernée et ici les parois de la veine 20 (carter extérieur 53 et moyeu 55 dans l'exemple), en supprimant les serrations en pied 281 et tête 283 d'OGV tout en conservant leur intérêt pour adresser les sillages turbulents intermédiaires,
- en figure 14 : Serrations 28 présentes en extrémité externe 283 et interne 281, mais absentes en partie intermédiaire du profil. On vise alors à limiter l'introduction des serrations aux zones où la turbulence est la plus importante et à supprimer ailleurs ces serrations afin de ne pas perturber le comportement aérodynamique dans ces zones. En particulier à un régime de fonctionnement médian, entre un ralenti et un plein régime, on limitera alors les décollements de la couche limite vers les extrémités externe 283 et interne 281.

Concernant la forme des serrations 28, ce pourra être des ondulations arrondies, comme des ondulations sinusoïdales, ou des formes autres, comme celle en sapin illustrée figure 16. Figures 15, 16, mais aussi figure 5, les (certaines) serrations 28 présentent un angle incident α aigu par rapport à l'axe X.

Suivant les cas de figures, on pourra aussi adapter la flèche de la structure 1 : en anglais, « sweep » angle; angle aigu par rapport à la perpendiculaire à l'axe X, à l'endroit de la structure.

Pour augmenter la décorrelation ou déphasage entre les sources de bruit le long de l'envergure, on pourra aussi choisir que le bord d'attaque 164 et/ou le bord de fuite 165 profilé(s) s'étende suivant une ligne générale incurvée ayant une concavité orientée vers l'amont, comme illustré par exemple figures 6 ou 10.

On aura en outre compris de ce qui précède que la structure 1 sur laquelle on a raisonné pourra typiquement, comme dans le cas non limitatif d'une application à des OGVs, appartenir à un ensemble de structures profilées chacune ayant toutes ou partie des caractéristiques précitées, et dont les directions d'allongement respectives Z s'étendront radialement autour de l'axe X.

Notamment dans le cas non limitatif de tels OGVs 1/26, on pourra en outre chercher à absorber les inconvénients liés aux tourbillons de bout des pales de la soufflante 14, là où ils sont de plus grande taille qu'ailleurs et assez énergétiques.

Pour cela, on pourra chercher à ce que la distance L2 entre deux sommets 300,320 de dents ou de creux consécutifs et/ou l'amplitude d soit plus importante (ou donc longue) en extrémité radialement extérieure 283 de la longueur L1 qu'en extrémité radialement intérieure 281 en suivant donc une loi d'évolution monotone.

Ainsi, les amplitudes et/ou longueurs d'onde des serrations 26 concernées seront plus importantes (ou donc longues) près du carter extérieur 53 que près de la zone inter-veines (moyeu 55/paroi 160).

Il est aussi à noter que l'invention permet de prendre en compte les propriétés locales de l'écoulement turbulent U concerné, comme celui à l'amont des OGV par exemple, pour définir la géométrie des ondulations en fonction de la distribution radiale de l'échelle intégrale de la turbulence (^ figure 19) dans le sillage de la soufflante 14. Il est précisé que le sillage de la figure 4 peut interagir tant avec les OGV (au-dessus du bec) qu'avec les IGV (en dessous du bec).

En liaison avec ce point, la figure 6 montre un OGV 1/26 avec des ondulations optimisées en fonction de l'échelle intégrale A de la turbulence locale le long de l'envergure. Il convient d'observer que l'amplitude d des ondulations et la « longueur d'onde » L2 sont bien plus importantes près du carter 55 qu'en pied d'aube OGV (support/moyeu 55) hors couches limites. Ceci est dû aux tourbillons de bout de pale de la soufflante 14.

Les figures 18 et 19 schématisent en outre respectivement l'intensité de turbulence et l'évolution radiale de l'échelle intégrale de la turbulence, dans le sillage de la soufflante 14 à l'amont des OGV 26. Dans cet exemple, à partir des 2/3 extérieurs, l'échelle intégrale de la turbulence (^) augmente brusquement, pour culminer juste avant le rayon extérieur, rext. En pratique, une évolution parabolique ou linéaire, comme illustré en pointillés et tirets respectivement sur la figure 19, peut être utilisée pour définir l'évolution monotone des serrations.

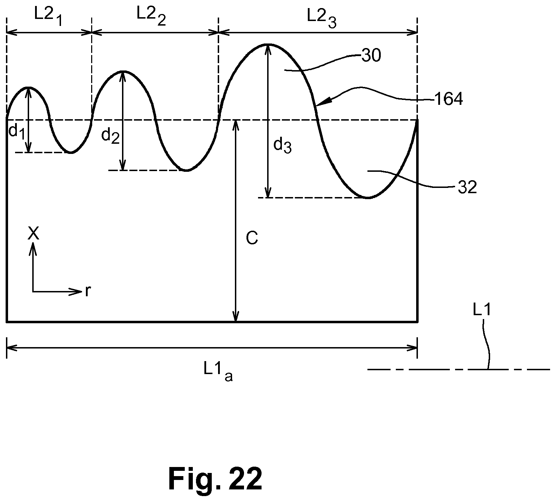

Dans les solutions des figures 20 à 22, on a présenté des situations où, afin de nouveau de prendre en considération un écoulement d'air inhomogène et/ou anisotrope et assurer au mieux le compromis acoustique/aérodynamique/mécanique précité, il est donc proposé que, le long du bord d'attaque 164 et/ou du bord de fuite 165 profilé(s), sur une partie au moins de ladite longueur L1, les serrations 28 présentent un motif géométrique répétitif mais dont la forme présente un étirement et/ou une contraction :
- transversalement à la direction d'allongement (on a alors une amplitude qui varie ; cf. d₁, d₂, ... figure 20; voir aussi figure 22), et/ou
- suivant la direction d'allongement (on a alors une longueur du motif répétitif dans la direction d'allongement qui varie ; cf. longueurs L2₁ à L2₃ figure 22; voir aussi figure 21).

Ainsi, le long du bord d'attaque 164 et/ou du bord de fuite 165, les serrations (28,28a) présenteront, sur une partie au moins de ladite longueur (L1) exposée à l'écoulement d'air, un motif géométrique transformé par des mise à échelles successives, via des facteurs multiplicatifs, ceci suivant la direction d'allongement (L2, L2₁, L2₂, L2₃, ...) et/ou transversalement à la direction d'allongement (d, d₁, d₂, ...).

Dans les deux premiers cas (figures 20-21), les étirements et/ou contractions d'un motif géométrique répétitif « de référence » conservent le motif soit en amplitude soit en fréquence en suivant une loi d'évolution monotone (longueur L2 du motif, dans la direction d'allongement).

Ainsi, figure 20, si l'on prend comme référence de motif celui en gris sur la figure (limite par traits mixtes), on voit que suivant la longueur L1, la longueur ou fréquence L2 du motif est conservée et que par contre l'amplitude d varie (d₁, d₂...). Dans la solution de la figure 21, c'est l'inverse : l'amplitude d est conservée et la longueur ou fréquence L2 du motif varie.

Sur les figures 20-21, on a modifié un profil de serrations périodique, défini par un motif géométrique répété (motif « de référence » dont un exemple est illustré en gris) présentant deux directions caractéristiques (e.g. les directions X,r des figures concernées, avec r ≠ X, et par exemple r=Z), par ), ceci par le biais de la transformation suivante: le motif générique est mis à l'échelle souhaitée via un facteur multiplicatif dans une direction caractéristique, tandis que dans l'autre direction caractéristique les dimensions du motif peuvent rester inchangées (figures 20-21), ou suivre une mise à l'échelle (figure 22).

On pourra en effet préférer, pour des zones à fort impact acoustique, des étirements et/ou contractions qui varieront en amplitude et en fréquence, comme dans l'exemple de la figure 22 : fréquence L2 et amplitude d du motif qui varient ensemble : L2₁, L2₂, L2₃... et d₁, d₂, d₃....

Dès lors qu'il a été établi une relation entre « amplitude » et « fréquence », on pourra alors souhaiter conserver les proportions du motif géométrique répétitif ; voir homothétie de la figure 22.

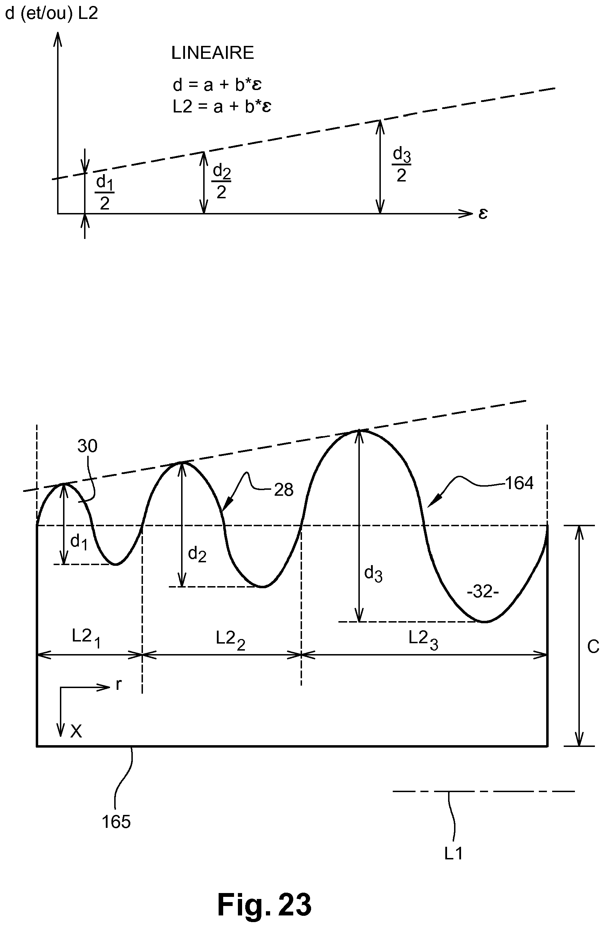

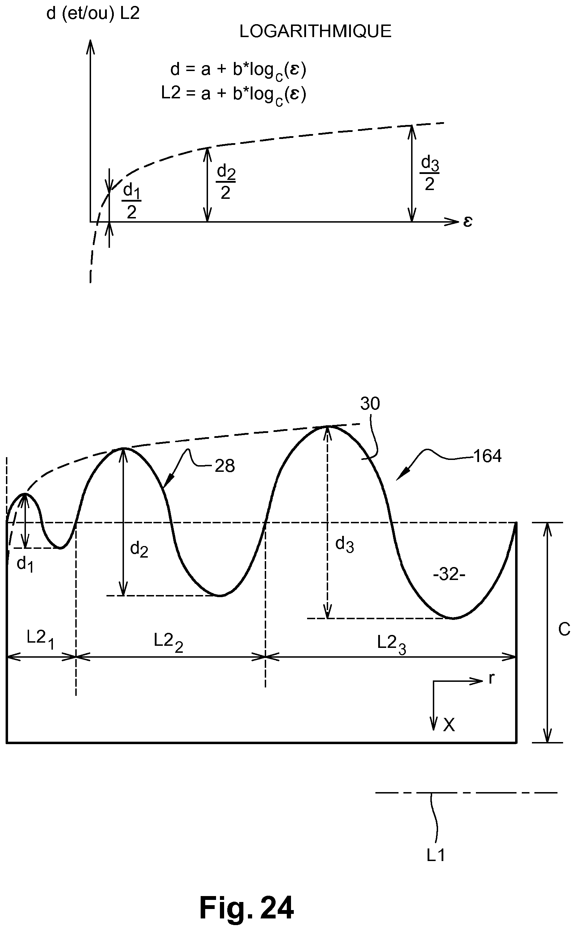

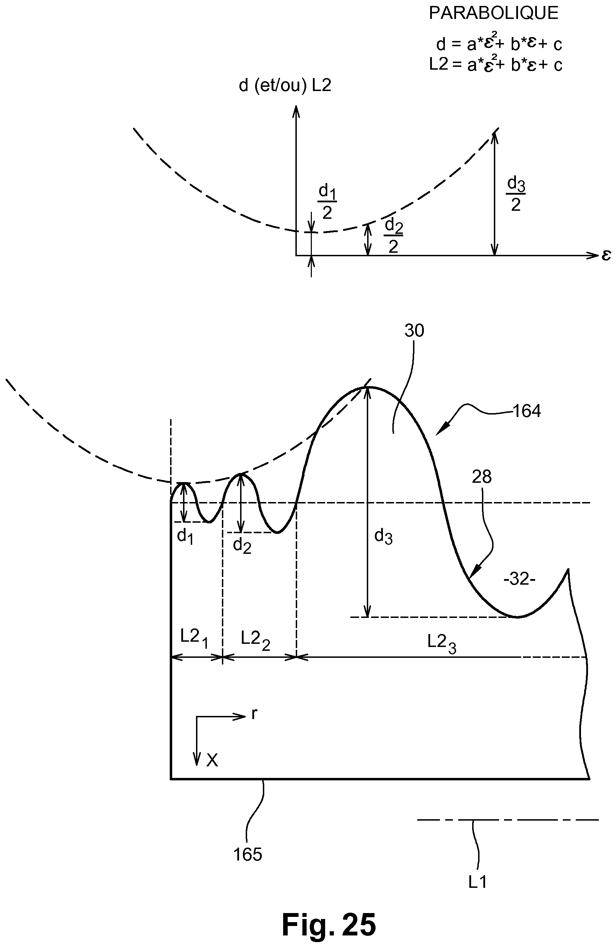

Quant aux figures 23 à 25, elles schématisent trois situations où, sur une partie au moins de ladite longueur (L1) exposée à l'écoulement d'air, les transformations des serrations suivent des lois d'évolution respectivement :
- linéaire (figure 23),
- logarithmique (figure 24),
- parabolique (figure 25).

On pourra préférer une loi quadratique, hyperbolique ou exponentielle ; ceci en « amplitude » (d₁, d₂, d₃, ...) et/ou « fréquence » (L2, L2₁, L2₂, L2₃, ...).

De façon plus générale, une variation non-périodique et monotone en dite amplitude (d) et/ou fréquence (L2) des serrations 28 pourra être opportune, pour les mêmes raisons que précité.

## Revendications

1. Structure profilée pour aéronef ou pour turbomachine d'aéronef, la structure profilée :
- étant allongée suivant une direction d'allongement selon laquelle la structure présente une longueur (L1) exposée à un écoulement d'air, et
- présentant, transversalement à la direction d'allongement, un bord d'attaque (164) et/ou un bord de fuite (165), dont l'un au moins est profilé et présente, suivant ladite direction d'allongement, des serrations (28,28a) définies par des dents (30) et des creux (32) se succédant,
lesdites dents (30) et creux (32) qui se succèdent ne s'étendant que sur une partie de ladite longueur exposée à l'écoulement d'air, une partie restante (280) de ladite longueur étant lisse, et
sur ladite partie de longueur, à l'exception de zones (33,35) comprenant au plus trois dents successives situées à chaque extrémité de ladite partie de longueur, les serrations (28, 28a) présentant des variations d'amplitude (d) et/ou d'écartement (L2) entre deux sommets de dents (30) ou de creux successifs,
**caractérisée en ce que** le long du bord d'attaque (164) et/ou du bord de fuite (165) profilé(s) lesdites variations d'amplitude (d) et/ou d'écartement (L2) sont monotones.

2. Structure profilée selon la revendication 1 dans laquelle, sur une partie au moins de la longueur (L1) exposée à l'écoulement d'air où des serrations sont présentes et, soit en référence à une corde moyenne, soit pour chaque corde à chaque serration suivant ladite direction, ces serrations respectent, transversalement à la direction d'allongement, la relation : 0.005≤d/c≤0.5, avec : « d » l'amplitude des serrations en m et « c » la corde de la structure profilée, à l'endroit des serrations, en m.

3. Structure profilée selon l'une quelconque des revendications précédentes dans laquelle, le long du bord d'attaque (164) et/ou du bord de fuite (165) profilé(s) et par variation d'amplitude et/ou d'écartement entre deux sommets de dents (30) ou de creux successifs, les serrations (28,28a) se raccordent progressivement à ladite partie lisse (280) de la longueur.

4. Structure profilée selon l'une quelconque des revendications précédentes, dans laquelle les serrations se terminent par un raccord (280a) qui tangente ladite partie lisse (280).

5. Structure profilée selon l'une quelconque des revendications précédentes dans laquelle, sur ladite partie lisse (280) de la longueur, ladite structure présente une corde (c) plus longue qu'elle ne l'est en fond de creux (32).

6. Structure profilée selon l'une quelconque des revendications précédentes dans laquelle, sur ladite partie de longueur, à l'exception desdites zones, une série d'au moins trois dents (30) et trois creux (32) consécutifs présente une distance (L2) strictement croissante, suivant ladite direction d'allongement, entre deux sommets de dents (30) ou de creux (32) consécutifs(s).

7. Structure profilée selon l'une quelconque des revendications précédentes dans laquelle, sur ladite partie de longueur, à l'exception desdites zones, une série d'au moins trois dents (30) et trois creux (32) consécutifs présente une amplitude (d) strictement croissante.

8. Structure profilée selon l'une quelconque des revendications précédentes dans laquelle, suivant ladite longueur exposée à l'écoulement d'air, les serrations (28,28a) sont absentes :
- à l'une au moins des deux extrémités de ladite longueur, ou
- en partie intermédiaire entre ces extrémités et présentes vers lesdites deux extrémités.

9. Structure profilée selon l'une quelconque des revendications précédentes dans laquelle, sur une partie au moins de ladite longueur où des serrations sont présentes, l'amplitude (d) et/ou l'écartement (L2) entre deux sommets de dents (30) ou de creux successifs varie de manière non-périodique.

10. Structure profilée selon l'une quelconque des revendications précédentes dans laquelle, sur une partie au moins de ladite longueur où des serrations sont présentes, et l'amplitude (d) et/ou l'écartement (L2) entre deux sommets de dents (30) ou de creux successifs varie de manière linéaire, quadratique, hyperbolique, exponentielle et/ou logarithmique.

11. Ensemble de structures profilées, chacune selon l'une quelconque des revendications précédentes, dont les directions d'allongement respectives s'étendent radialement autour d'un axe de révolution, et dont la distance (L2) entre deux sommets de dents (30) ou de creux (32) consécutifs et/ou l'amplitude est plus longue à une extrémité radialement extérieure de la longueur (L1) exposée à un écoulement d'air (U) qu'à une extrémité radialement intérieure de cette longueur.

12. Turbomachine présentant un axe général (X) et comprenant un rotor, pouvant tourner autour dudit axe général (X), et un stator, le stator et/ou le rotor comprenant des structures profilées (1), chacune selon l'une quelconque des revendications précédentes,

13. Turbomachine selon la revendication 12, dans laquelle la structure profilée est celle :
- d'une paroi (160) annulaire de séparation, pour la séparation d'un flux d'air, en aval d'une soufflante de la turbomachine, entre un flux primaire et un flux secondaire, ou
- des aubes (26, OGV) fixes de guidage du flux secondaire (Fs), lesquelles définissent desdites structures profilées, ou
- des aubes (24, IGV) fixes de guidage du flux primaire (Fp), lesquelles définissent desdites structures profilées.

14. Turbomachine selon la revendication 12 ou 13, comprenant deux rotors (480a,480b), pouvant tourner parallèlement audit axe général (X), l'un et/ou l'autre des rotors comprenant des structures profilées (1), chacune selon l'une quelconque des revendications précédentes.

## Patentansprüche

1. Profilierte Struktur für ein Luftfahrzeug oder ein Turbotriebwerk eines Luftfahrzeugs, wobei die profilierte Struktur
- in einer Erstreckungsrichtung langgestreckt verläuft, in der die Struktur eine Länge (L1) aufweist, die einer Luftströmung ausgesetzt ist, und
- quer zu der Erstreckungsrichtung eine Vorderkante (164) und/oder eine Hinterkante (165) aufweist, von denen zumindest eine profiliert ausgeführt ist und entlang der Erstreckungsrichtung Kerbverzahnungen (28, 28a) aufweist, die durch aufeinanderfolgende Zähne (30) und Vertiefungen (32) definiert sind,
wobei sich die aufeinanderfolgenden Zähne (30) und Vertiefungen (32) nur über einen Längenabschnitt der der Luftströmung ausgesetzten Länge erstrecken, wobei ein verbleibender Längenabschnitt (280) glatt ausgeführt ist, und
wobei über den Längenabschnitt, mit Ausnahme von Bereichen (33, 35) mit höchstens drei aufeinanderfolgenden Zähnen, die sich an jedem Ende des Längenabschnitts befinden, die Kerbverzahnungen (28, 28a) Änderungen in der Höhe (d) und/oder im Abstand (L2) zwischen zwei Scheitelpunkten aufeinanderfolgender Zähne (30) oder Vertiefungen aufweisen,
**dadurch gekennzeichnet, dass** die Änderungen in der Höhe (d) und/oder im Abstand (L2) entlang der profilierten Vorderkante (164) und/oder Hinterkante (165) monoton sind.

2. Profilierte Struktur nach Anspruch 1,
wobei über zumindest einen Längenabschnitt der der Luftströmung ausgesetzten Länge (L1), in dem Kerbverzahnungen vorhanden sind, und entweder bezogen auf eine mittlere Sehne oder bei jeder Sehne an jeder Kerbverzahnung entlang der genannten Richtung, diese Kerbverzahnungen quer zur Erstreckungsrichtung die Beziehung 0,005≤d/c≤0,5 erfüllen, wobei "d" die Höhe der Kerbverzahnungen in m und "c" die Sehne der profilierten Struktur an der Stelle der Kerbverzahnungen in m darstellt.

3. Profilierte Struktur nach einem der vorhergehenden Ansprüche,
wobei entlang der profilierten Vorderkante (164) und/oder Hinterkante (165) und pro Änderung in der Höhe und/oder im Abstand zwischen zwei aufeinanderfolgenden Scheitelpunkten von Zähnen (30) oder Vertiefungen die Kerbverzahnungen (28, 28a) sich schrittweise an den glatten Längenabschnitt (280) anschließen.

4. Profilierte Struktur nach einem der vorhergehenden Ansprüche,
wobei die Kerbverzahnungen in einem Anschluss (280a) enden, der den glatten Abschnitt (280) tangiert.

5. Profilierte Struktur nach einem der vorhergehenden Ansprüche,
wobei die Struktur an dem glatten Längenabschnitt (280) eine Sehne (c) aufweist, die länger ist als am Boden der Vertiefung (32).

6. Profilierte Struktur nach einem der vorhergehenden Ansprüche,
wobei über den Längenabschnitt, mit Ausnahme der genannten Bereiche, eine Reihe von zumindest drei aufeinanderfolgenden Zähnen (30) und Vertiefungen (32) einen entlang der Erstreckungsrichtung strikt zunehmenden Abstand (L2) zwischen zwei Scheitelpunkten von aufeinanderfolgenden Zähnen (30) oder Vertiefungen (32) aufweist.

7. Profilierte Struktur nach einem der vorhergehenden Ansprüche,
wobei über den Längenabschnitt, mit Ausnahme der genannten Bereiche, eine Reihe von zumindest drei aufeinanderfolgenden Zähnen (30) und Vertiefungen (32) eine strikt zunehmende Höhe (d) aufweist.

8. Profilierte Struktur nach einem der vorhergehenden Ansprüche,
wobei entlang der der Luftströmung ausgesetzten Länge die Kerbverzahnungen (28, 28a) nicht vorhanden sind:
- an zumindest einem der beiden Enden der genannten Länge, oder
- in einem Zwischenbereich zwischen diesen Enden, und zu den beiden Enden hin vorhanden sind.

9. Profilierte Struktur nach einem der vorhergehenden Ansprüche,
wobei über zumindest einen Längenabschnitt, in dem Kerbverzahnungen vorhanden sind, die Höhe (d) und/oder der Abstand (L2) zwischen zwei Scheitelpunkten von aufeinanderfolgenden Zähnen (30) oder Vertiefungen nicht-periodisch variiert.

10. Profilierte Struktur nach einem der vorhergehenden Ansprüche,
wobei über zumindest einen Längenabschnitt, in dem Kerbverzahnungen vorhanden sind, und die Höhe (d) und/oder der Abstand (L2) zwischen zwei Scheitelpunkten von aufeinanderfolgenden Zähnen (30) oder Vertiefungen linear, quadratisch, hyperbolisch, exponentiell und/oder logarithmisch variiert.

11. Anordnung von profilierten Strukturen, jeweils nach einem der vorhergehenden Ansprüche, die mit ihren jeweiligen Erstreckungsrichtungen radial um eine Rotationsachse verlaufen und bei denen der Abstand (L2) zwischen zwei Scheitelpunkten von aufeinanderfolgenden Zähnen (30) oder Vertiefungen (32) und/oder die Höhe an einem radial äußeren Ende der einer Luftströmung (U) ausgesetzten Länge (L1) länger ist als an einem radial inneren Ende dieser Länge.

12. Turbotriebwerk mit einer Hauptachse (X), enthaltend einen Rotor, der um die Hauptachse (X) drehbar ist, und einen Stator, wobei der Stator und/oder der Rotor profilierte Strukturen (1) jeweils nach einem der vorhergehenden Ansprüche aufweisen.

13. Turbotriebwerk nach Anspruch 12,
wobei die profilierte Struktur gehört zu:
- einer ringförmigen Trennwand (160) zur stromabwärts eines Gebläses des Turbotriebwerks erfolgenden Trennung eines Luftstroms in einen Primärstrom und einen Sekundärstrom,
- oder feststehenden Schaufeln (26, OGV) zur Führung des Sekundärstroms (Fs), die die genannten profilierten Strukturen definieren, oder
- feststehenden Schaufeln (24, IGV) zur Führung des Primärstroms (Fp), die die genannten profilierten Strukturen definieren.

14. Turbotriebwerk nach Anspruch 12 oder 13, enthaltend zwei Rotoren (480a, 480b), die parallel zu der Hauptachse (X) drehbar sind, wobei der eine und/oder der andere der Rotoren profilierte Strukturen (1) jeweils nach einem der vorhergehenden Ansprüche aufweist.

## Claims

1. A profiled structure for an aircraft or for a turbomachine of an aircraft, the profiled structure:
- being elongated in a direction of elongation in which the structure has a length (L1) exposed to an airflow, and
- having, transversely to the direction of elongation, a leading edge (164) and/or a trailing edge (165), at least one of which is profiled and has, along said direction of elongation, serrations (28, 28a) defined by successive teeth (30) and depressions (32),
the successive teeth (30) and depressions (32) extending over only a part of said length exposed to the airflow, a remaining part (280) of said length being smooth, and
over said part of the length, with the exception of zones (33, 35) comprising at most three successive teeth located at each end of said part of the length, the serrations (28, 28a) having variations in amplitude (d) and/or in spacing (L2) between two successive vertices of teeth (30) or of depressions,
**characterised in that**, along the profiled leading edge (164) and/or the profiled trailing edge (165) said variations in amplitude (d) and/or in spacing (L2) are monotonic.

2. The profiled structure according to claim 1 wherein, over at least part of the length (L1) exposed to the airflow where serrations are present and, either with reference to an average chord or for each chord at each serration along said direction, these serrations comply, transversely to the direction of elongation, with the relationship: 0.005≤d/c≤0.5, with: "d" being the amplitude of the serrations in meters and "c" being the chord of the profiled structure, at a location of said serrations, in meters.

3. The profiled structure according to any one of the preceding claims in which, along the profiled leading edge (164) and/or profiled trailing edge (165) and by variation in amplitude and/or spacing between two successive vertices of teeth (30) or of depressions, the serrations (28, 28a) progressively join said smooth part (280) of the length.

4. The profiled structure according to any one of the preceding claims, wherein the serrations terminate in a joint (280a) that is tangent to said smooth part (280).

5. The profiled structure according to any one of the preceding claims wherein, on said smooth part (280) of the length, said structure has a chord (c) longer than the chord is at the bottom of the depression (32).

6. The profiled structure according to any one of the preceding claims in which, over said part of the length, with the exception of said zones, a series of at least three consecutive teeth (30) and three consecutive depressions (32) has a strictly increasing distance (L2), along said direction of elongation, between two consecutive vertices of teeth (30) or of depressions (32).

7. The profiled structure according to any one of the preceding claims wherein, over said part of the length, with the exception of said zones, a series of at least three consecutive teeth (30) and three depressions (32) has a strictly increasing amplitude (d).

8. The profiled structure according to any one of the preceding claims wherein, along said length exposed to the air flow, the serrations (28,28a) are absent:
- at least one of the two ends of said length, or
- at an intermediate part between said ends and present towards said two ends.

9. The profiled structure according to any one of the preceding claims wherein, over at least a part of said length where serrations are present, the amplitude (d) and/or the spacing (L2) between two successive vertices of teeth (30) or of depressions varies non-periodically.

10. The profiled structure according to any one of the preceding claims wherein, over at least a part of said length where serrations are present, and amplitude (d) and/or spacing (L2) between two successive vertices of teeth (30) or of depressions varies linearly, quadratically, hyperbolically, exponentially and/or logarithmically.

11. A set of profiled structures, each according to any one of the preceding claims, whose respective directions of elongation extend radially about an axis of revolution, and whose distance (L2) between two successive vertices of teeth (30) or of depressions (32) and/or the amplitude is longer at a radially outer end of the length (L1) exposed to an airflow (U) than at a radially inner end of that length.

12. A turbomachine having a general axis (X) and comprising a rotor, rotatable about said general axis (X), and a stator, the stator and/or rotor comprising profiled structures (1), each according to any of the preceding claims,

13. The turbomachine of claim 12, wherein the profiled structure is that:
- of an annular separating wall (160) for separating an air flow downstream of a fan of the turbomachine between a primary flow and a secondary flow,
- or stationary blades (26, OGV) for guiding a secondary flow (Fs), which define said profiled structures.
- or stationary blades (24, IGV) for guiding a primary flow (Fp), which define said profiled structures.

14. The turbomachine according to claim 12 or 13, comprising two of said rotors (480a, 480b), each rotatable parallel to said general axis (X), one and/or the other of the rotors comprising profiled structures (1), each according to any one of the preceding claims.
